# EUROPEAN PATENT APPLICATION

(11) **EP 0 979 016 A1**
(43) Date of publication of application: **09.02.2000**
(21) Application number: 99114896.6
(22) Date of filing: 30.07.1999
(51) Int. Cl.: H04Q 7/22

(54) **Positioning system for vehicles**

(30) Priority: 05.08.1998 EP 98401996
(71) Applicant: Mannesmann VDO Aktiengesellschaft, 60388 Frankfurt am Main (DE)
(72) Inventor: Koch, Matthias, 78120 Rambouillet (FR); Palisson, Francois, 95220 Herblay (FR)
(74) Representative: Rassler, Andrea, Dipl.-Phys.

(57) **Abstract**

In case of a GSM system, there are several cellular fixed emitter/receivers called "bases" and a well-known process is implemented for electing one of the bases for a mobile (1) being put in communication with.
An emitter in such a system emits some data concerning its identity and/or geographical position, and geographical data such as co-ordinates and names of towns or any other event in the area. A receiver is provided with means (3) for handling said data and constructing a map on a screen (5), from said information.

## Description

### TECHNICAL FIELD :

The present invention relates to a device for being used in relation with a broadcast system providing the position of events in a geographic zone, using a radio link to receive the information.

It also relates to a relay station of such a broadcast system.

### BACKGROUND ART :

The Patent Application WO 98/12683 describes a device corresponding to the above introduction. According to this document, a traffic information system, that comprises several radioelectric areas, is sending to vehicles information characterizing their position, based on which radioelectric area they are inside.

### SUMMARY OF THE INVENTION :

An object of the invention is to allow displaying of information in a customer-friendly manner, with the least possible local hardware.

For this purpose, while information is broadcasted about name and position of objects situated in said geographic zone, the device is provided with means for receiving said information about position and name of said objects, and with processing means for displaying a map of the area on basis of said information.

A relay station is equipped with means for broadcasting, in a data channel, a service which consists of the transmission of data that allow defining a map of the geographic zone where the relay station is positioned.

Special embodiments of the invention appear in claims 2 to 4 and 6 to 8.

These and other more detailed aspects of the invention will be apparent from the following description of embodiments of the invention given by way of non-limitative examples.

### BRIEF DESCRIPTION OF THE FIGURES :

Figure 1 schematically represents a relay station in a positioning system.
Figure 2 schematically represents a device using a radio link to receive information.
Figure 3 is a graph showing the radioelectric and geographic coverage of telephone transmitters relays.
Figure 4 is a schematic view of an example of how to display information.

### DETAILED DESCRIPTION :

The following will describe a positioning system having relay stations with a GSM base and a customer device with a GSM telephone, in a car. It is clear that the GSM station can be replaced with a so-called RDS radio emitter, or any other means for data broadcast (MMDS, DAB, DVB...), and the GSM telephone can be replaced with a so-called RDS radio receiver. Such a device can not only be used in a car, but also be used independently as a nomadic unit.

The positioning system relates to a given geographic zone and to the position of towns and mainly traffic related events (accidents, traffic jam,...) or tourist events in this zone. A complementary information about the direction followed by the user allows knowing if he heads for a disturbed or interesting area. For receiving the information, this system makes use of a mobile telephone (e.g.: a GSM), included in or connected to a local device.

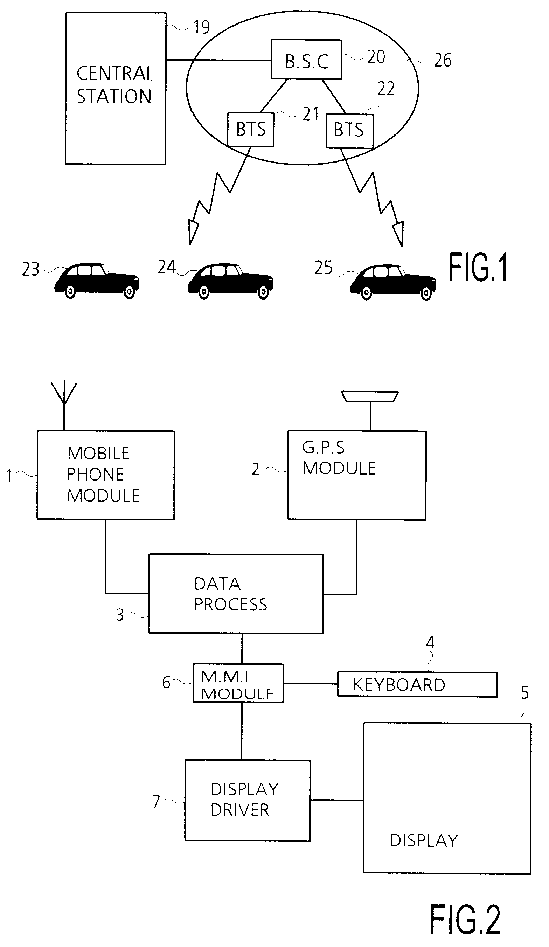

Figure 1 shows a relay station comprising a GSM system 26 with a base station controller 20 (BSC) and several base transceiver stations 21, 22 (BTS). This GSM system is coupled to a central station 19, which deals with traffic information data. It comprises a known processor (not shown) with a digital map of the concerned area (to be defined hereafter). Data concerning traffic events are sent to cars 23, 24, 25, that are each equipped with a device for providing information about the position of towns situated in the geographic zone and traffic related events or tourist events.

In case the device is not equipped with a GPS system, information allowing to define its position would be received from the telephone system 26 to which the device is linked, in a data channel (e.g. for GSM, in the SMS data channel). In case of a GSM system, there are several cellular fixed emitter/receivers called "bases", each of the type shown in figure 1, and a well-known process is implemented for electing one of the bases for a mobile being put in communication with. By identifying the bases to the mobile devices, it is possible to determine at any moment in which region the device is positioned. In the case of a car-radio, the well known RDS system allows to select the better emitter. As said emitter is probably also the nearest to the receiver of a device, then the identification of a particular emitter allows knowing in which region the device is positioned.

Such a device, shown by figure 2, comprises a mobile phone module 1, a data processor 3, a man machine interface module 6 (MMI) connected to a keyboard 4 for entering customer's commands. It has a display 5 e.g. a dot-matrix one, which allows displaying the position of the towns and their names, with regard of the current customer position given by the location system in a X/Y coordinate system, or as a function of information transmitted by the mobile telephone. The keyboard is connected to the display by means of the interface module 6.

The device of figure 2 has a plus, as it is equipped with a known positioning system 2 (e.g. a so-called GPS, or GPS + gyrocompass, or DGPS) and proper data processing software). Said GPS system could also be external and linked to the device.

The device can also consist of separate elements, one of them containing the data processor, connected to a mobile telephone for receiving the information, possibly connected to a GPS receiver and, if necessary, connected to an external display.

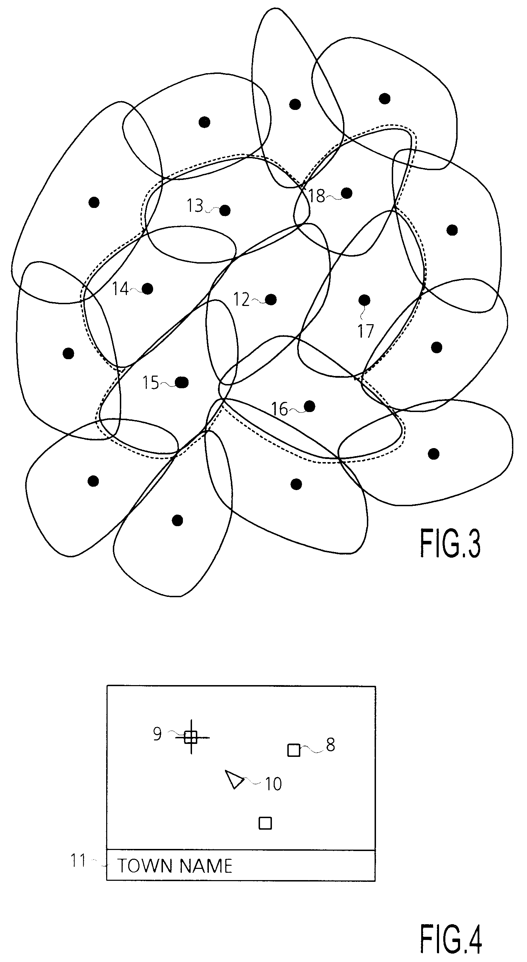

In figure 3, several areas, in which a station can be received, are indicated by potato-shaped blocks, each of them surrounding a relay station indicated with a dot. Some of them are referenced 12 to 18. Each relay station broadcasts, in a data channel, data that allow identifying the station. It also broadcasts a service consisting of the transmission of the coordinates of either large or small towns with their names, which are situated in the geographic zone defined by the radioelectric area covered by the relay station broadcasting the information. Said area may also comprise the radioelectric areas covered by the geographically adjacent relay stations of the same mobile telephone network. For example, for the station 12, said area might also comprise the radioelectric areas covered by the stations 13 to 18 (this area is indicated by a broken line). This will guarantee the continuity of the service even if the corresponding covered radioelectric areas have no overlapping to one another (this can happen when starting a new mobile telephone network). The coordinates of the cities are stored in a memory of the central station. Main roads could also be mapped or other details of which the complexity would be directly related to storage capacity or data channel capacity.

The mobile telephone relay stations broadcast, on the same data channel, the coordinates of traffic or tourist relevant events or other events (e.g. meteorology) covering a given geographic area. These coordinates are positioned on the display with dedicated icons that allow identifying their nature, with the name(s) of the relevant place. This last information could be also obtained as already above mentioned for the city names.

An example of an image on the display 5 is illustrated in figure 4. The customer location point 10 is currently positioned at the center of the display; it is made of an arrow for indicating the direction that is followed. The display can be oriented either northwards or in the moving direction. The user can choose the scale factor. Depending on the screen dimensions (and on the chosen scale), the marking of the towns could be done by means of a standard icon like a square as indicated in 8 or 9. A town or any other object can be selected by means of an index, that can be moved by the user, as shown by a cross at the icon 9; the name of the town that is selected in that way is indicated in a caption frame 11.

The dimensions of the geographical area displayed on the screen could be chosen by the user; the cities' and information's icons displayed on the screen are filtered by the software according to the displayed area and as a function of their distance to the customer position and of their importance.

## Claims

1. A device for being used in relation with a broadcast system providing the position of events in a geographic zone, using a radio link to receive the information, characterized in that, while information is broadcasted about name and position of objects situated in said geographic zone, the device is provided with means for receiving said information about position and name of said objects, and with processing means for displaying a map of the area on basis of said information.

2. A device according to claim 1, characterized in that the objects are towns, and/or tourist events.

3. A device according to claim 1, characterized in that it is equipped with a positioning module for determining its own position.

4. A device according to claim 1, characterized in that it is equipped with a software module for determining its own position by calculations based on identification data received from the station.

5. A relay station of a positioning system, characterized in that it is equipped with means for broadcasting, in a data channel, a service which consists of the transmission of data that allow defining a map of the geographic zone where the relay station is positioned.

6. A relay station according to claim 5, characterized in that the data comprise coordinates of either large and/or small towns with their names, which are situated in the geographic zone.

7. A relay station according to claim 5, characterized in that the geographic zone comprises the radioelectric area covered by the relay station which broadcasts the information.

8. A relay station according to claim 7, characterized in that the geographic zone comprises also the radioelectric areas covered by the geographically adjacent relay stations of the same mobile telephone network.
